# EUROPÄISCHE PATENTSCHRIFT

(11) **EP 4 094 227 B1**
(45) Veröffentlichungstag und Bekanntmachung des Hinweises auf die Patenterteilung: **05.03.2025**
(21) Anmeldenummer: 20816125.7
(22) Anmeldetag: 23.11.2020
(51) Int. Cl.: G06T 11/00

(54) **ERZEUGEN EINER DRAUFSICHT AUF EIN KRAFTFAHRZEUG**
GENERATING A TOP VIEW OF A MOTOR VEHICLE
GÉNÉRATION D'UNE VUE DE DESSUS D'UN VÉHICULE À MOTEUR

(30) Priorität: 24.01.2020 DE 102020101637
(43) Veröffentlichungstag der Anmeldung: 30.11.2022
(73) Patentinhaber: Bayerische Motoren Werke Aktiengesellschaft, 80809 München (DE)
(72) Erfinder: van der Heiden, Tessa, 3571 Utrecht (DE); Weiss, Christian, 93480 Hohenwarth (DE)
(86) Internationale Anmeldenummer: PCT/EP2020/083051
(87) Internationale Veröffentlichungsnummer: WO 2021/148164

(56) Entgegenhaltungen:
- US-A1- 2019 094 875
- ZHU XINGE ET AL: "Generative Adversarial Frontal View to Bird View Synthesis", 2018 INTERNATIONAL CONFERENCE ON 3D VISION (3DV), IEEE, 5 September 2018 (2018-09-05), pages 454 - 463, XP033420123, DOI: 10.1109/3DV.2018.00059
- QUAN HOANG ET AL: "MGAN: TRAINING GENERATIVE ADVERSARIAL NETS WITH MULTIPLE GENERATORS", 27 October 2017 (2017-10-27), XP055605228, Retrieved from the Internet <URL:https://openreview.net/pdf?id=rkmu5b0a-> [retrieved on 20190715]
- TU DINH NGUYEN ET AL: "Dual Discriminator Generative Adversarial Nets", ARXIV.ORG, CORNELL UNIVERSITY LIBRARY, 201 OLIN LIBRARY CORNELL UNIVERSITY ITHACA, NY 14853, 12 September 2017 (2017-09-12), XP080820432

## Beschreibung

Die Erfindung betrifft eine Vorrichtung zum Erzeugen einer Draufsicht auf ein Kraftfahrzeug und ein Verfahren zum Trainieren dieser Vorrichtung.

Eine Draufsicht auf ein Kraftfahrzeug kann beispielsweise mittels einer oder mehrerer Kameras erzeugt werden, die an der Unterseite der Außenspiegel angebracht sind. Solche Systeme sind bereits am Markt beispielsweise unter der Bezeichnung BMW Top View erhältlich.

Nachteilig an dem bekannten Verfahren zum Erzeugen einer Draufsicht auf ein Kraftfahrzeug ist beispielsweise, dass der Bildbereich der Draufsicht durch die Position der Kamera(s) vorgegeben und begrenzt ist. Außerdem sind dafür zwingend die entsprechenden Kameras notwendig.

In dem Konferenzbeitrag "Generative Adversarial Frontal View to Bird View Synthesis" von Xinge Zhu et al. (2018 IEEE International Conference on 3D Vision, Seiten 454-463, DOI: 10.1109/3DV.2018.00059) wird ein sogenanntes BridgeGAN zur Erzeugung einer synthetischen Vogelperspektive vorgestellt. Mittels eines multi-GAN (GAN: Generative Adversarial Network) Models wird eine Frontalansicht in Vogelperspektive transformiert. Dabei wird Zwischenperspektive eingeführt, um die Herausforderungen der Transformation zu vereinfachen. Ferner werden Konsistenzbeschränkungen vorgestellt, mittels welcher - gemäß den Autoren - Eins-zu-Eins-Kreuzkorrespondenzen sowie konsistente Darstellungen von ansichtsübergreifenden Merkmalen gewährleistet werden können.

Es ist Aufgabe der Erfindung, eine Vorrichtung zum Erzeugen einer Draufsicht auf ein Kraftfahrzeug und ein Verfahren zum Trainieren dieser Vorrichtung anzugeben, die die genannten Nachteile beheben.

Die Aufgabe wird durch die Merkmale der unabhängigen Patentansprüche gelöst. Vorteilhafte Ausführungsformen sind in den abhängigen Ansprüchen beschrieben.

Ein erster Aspekt der Erfindung betrifft eine Vorrichtung zum Erzeugen einer von einer ersten Sicht-Information abhängigen ersten Draufsicht auf ein Kraftfahrzeug aus zumindest einem Bild von zumindest einer Kamera, deren optische Achse im Wesentlichen parallel zu einer Ebene ist, die aus der Fahrzeuglängsrichtung und der Fahrzeugquerrichtung aufgespannt ist.

Die erste Sicht-Information ist insbesondere eine Information, die die Ausrichtung der optischen Achse einer, gegebenenfalls virtuellen, Kamera, bzw. Sicht gegenüber einem Bezugssystem beschreibt. Beispielsweise ist die erste Sicht-Information eine Information, die die Ausrichtung der optischen Achse der zu erzeugenden Draufsicht gegenüber einer Ebene beschreibt, die aus der Fahrzeuglängsrichtung und der Fahrzeugquerrichtung aufgespannt ist.

Die Draufsicht ist eine Sicht von oben, deren optische Achse im Wesentlichen orthogonal zu einer Ebene ist, die aus der Fahrzeuglängsrichtung und der Fahrzeugquerrichtung aufgespannt ist.

Somit ist die erste Sicht-Information beispielsweise eine Information, die eine Sicht charakterisiert, deren optische Achse im Wesentlichen orthogonal zu einer Ebene ist, die aus der Fahrzeuglängsrichtung und der Fahrzeugquerrichtung aufgespannt ist, bei der der sich zwischen der optischen Achse und der Ebene ergebene Winkel zwischen 80° und 100° ist, beispielsweise wenn er 90°.

Die optische Achse der Kamera ist insbesondere im Wesentlichen parallel zu der Ebene, die aus der Fahrzeuglängsrichtung und der Fahrzeugquerrichtung aufgespannt ist, wenn der sich zwischen der optischen Achse und der Ebene ergebene Winkel <10° ist, beispielsweise wenn er 0°.

Die Vorrichtung ist eingerichtet, das zumindest eine Bild von der Kamera entgegenzunehmen.

Außerdem ist die Vorrichtung eingerichtet, aus dem Bild eine zweite Sicht-Information mittels einer Codier-Einheit zu extrahieren. Die zweite Sicht-Information ist insbesondere eine Information, die die Ausrichtung der optischen Achse der Kamera gegenüber der Ebene beschreibt, die aus der Fahrzeuglängsrichtung und der Fahrzeugquerrichtung aufgespannt ist.

Außerdem ist die Vorrichtung eingerichtet, aus dem Bild eine Sicht-unabhängige Inhalts-Information mittels der Codier-Einheit zu extrahieren, und die erste Draufsicht in Abhängigkeit von der ersten Sicht-Information und der Sicht-unabhängigen Inhalts-Information mittels einer ersten Generator-Einheit zu erzeugen.

Kern der Erfindung ist hierbei, die Sicht-unabhängige Inhalts-Information aus der Perspektive der ersten Sicht-Information dazustellen.

Die Vorrichtung umfasst zusätzlich eine erste Diskriminator-Einheit, die eingerichtet ist, die von der ersten Generator-Einheit erzeugte Draufsicht entgegenzunehmen, eine zweite Generator-Einheit, die eingerichtet ist, aus einer dritten Sicht-Information und einer Rausch-Information eine zweite Draufsicht zu erzeugen, und eine zweite Diskriminator-Einheit umfasst, die eingerichtet ist, die von der zweiten Generator-Einheit erzeugte Draufsicht entgegenzunehmen.

Die erste Diskriminator-Einheit und die zweite Diskriminator-Einheit sind insbesondere jeweils eingerichtet, zu entscheiden, ob die erste Draufsicht, bzw. die zweite Draufsicht von der ersten Generator-Einheit, bzw. zweiten Generator-Einheit erzeugt wurden, oder ob die erste Draufsicht, bzw. die zweite Draufsicht von einer Kamera erzeugt wurden, deren optische Achse im Wesentlichen orthogonal zu einer Ebene ist, die aus der Fahrzeuglängsrichtung und der Fahrzeugquerrichtung aufgespannt ist.

Die optische Achse dieser Kamera ist insbesondere im Wesentlichen orthogonal zu der Ebene, die aus der Fahrzeuglängsrichtung und der Fahrzeugquerrichtung aufgespannt ist, wenn der sich zwischen der optischen Achse und der Ebene ergebene Winkel zwischen 80° und 100° ist, beispielsweise wenn er 90°.

Kern der Erfindung ist hierbei, dass die beiden Diskriminator-Einheiten eingerichtet sind, ein "echtes" Kamerabild von einem künstlich erzeugten Kamerabild zu unterscheiden. Für die später beschriebenen Verfahren zum Trainieren der Vorrichtung ergibt sich dadurch der Effekt, dass die von den beiden Generator-Einheiten erzeugten Draufsichten eine hohe Qualität haben und im Idealfall nicht mehr von echten Kamerabildern unterscheidbar sind.

Die erste Generator-Einheit, die zweite Generator-Einheit, die erste Diskriminator-Einheit und die zweite Diskriminator-Einheit umfassen jeweils ein neuronales Netz.

Ein neuronales Netz (seltener auch neurales Netz) ist eine Ansammlung von einzelnen Informationsverarbeitungseinheiten (Neuronen), die schichtweise in einer Netzarchitektur angeordnet sind. Im Zusammenhang mit künstlicher Intelligenz spricht man von künstlichen neuronalen Netzen.

Die Neuronen (auch Knotenpunkte) eines künstlichen neuronalen Netzes sind schichtweise in sogenannten Layern angeordnet und in der Regel in einer festen Hierarchie miteinander verbunden. Die Neuronen sind dabei zumeist zwischen zwei Layern verbunden (Inter-Neuronlayer-Connection), in selteneren Fällen aber auch innerhalb eines Layers (Intra-Neuronlayer-Connection).

Beginnend mit der Eingabeschicht (Input Layer) fließen Informationen über eine oder mehrere Zwischenschichten (Hidden Layer) bis hin zur Ausgabeschicht (Output Layer). Dabei ist der Output des einen Neurons der Input des nächsten.

Die Eingabeschicht ist der Startpunkt des Informationsflusses in einem künstlichen neuronalen Netz.

Eingangssignale werden üblicherweise von den Neuronen am Anfang dieser Schicht aufgenommen und am Ende gewichtet an die Neuronen der ersten Zwischenschicht weitergegeben. Dabei gibt ein Neuron der Eingabeschicht die jeweilige Information an die Neuronen der ersten Zwischenschicht weiter.

Zwischen der Eingabe- und der Ausgabeschicht befindet sich in jedem künstlichen neuronalen Netz mindestens eine Zwischenschicht (auch Aktivitätsschicht oder verborgene Schicht von engl.: hidden layer). Je mehr Zwischenschichten es gibt, desto "tiefer" ist das neuronale Netz, im englischen spricht man in solchen Fällen auch von Deep Learning.

Theoretisch ist die Anzahl der möglichen verborgenen Schichten in einem künstlichen neuronalen Netzwerk unbegrenzt. In der Praxis bewirkt jede hinzukommende verborgene Schicht jedoch auch einen Anstieg der benötigten Rechenleistung, die für den Betrieb des Netzes notwendig ist.

Die Ausgabeschicht liegt hinter den Zwischenschichten und bildet die letzte Schicht in einem künstlichen neuronalen Netzwerk. In der Ausgabeschicht angeordnete Neuronen sind jeweils mit den Neuronen der letzten Zwischenschicht verbunden. Die Ausgabeschicht stellt den Endpunkt des Informationsflusses in einem künstlichen neuronalen Netz dar und enthält das Ergebnis der Informationsverarbeitung durch das Netzwerk.

Gewichte beschreiben die Intensität des Informationsflusses entlang einer Verbindung in einem neuronalen Netzwerk. Jedes Neuron vergibt dazu ein Gewicht für die durchfließende Information und gibt diese dann gewichtet und gegebenenfalls nach der Addition eines Wertes für die Neuronenspezifische Verzerrung (Bias) an die Neuronen der nächsten Schicht weiter. Üblicherweise werden die Gewichte und Verzerrungen zum Beginn des Trainings initialisiert. Das Ergebnis der Gewichtung und Verzerrung wird oft durch eine sogenannte Aktivierungsfunktion (z.B: Sigmoid oder tanh) geleitet, bevor es an die Neuronen der nächsten Schicht weitergeleitet wird.

Die Gewichte und Verzerrungen werden während des Trainingsprozesses so angepasst, dass das Endresultat möglichst genau den Anforderungen entspricht.

Das neuronale Netz der ersten Generator-Einheit und das neuronale Netz der zweiten Generator-Einheit haben jeweils zumindest teilweise die gleichen Kantengewichte, und das neuronale Netz der ersten Diskriminator-Einheit und das neuronale Netz der zweiten Diskriminator-Einheit haben jeweils zumindest teilweise die gleichen Kantengewichte.

Insbesondere haben das neuronale Netz der ersten Generator-Einheit und das neuronale Netz der zweiten Generator-Einheit, bzw. das neuronale Netz der ersten Diskriminator-Einheit und das neuronale Netz der zweiten Diskriminator-Einheit zumindest teilweise gleiche Kantengewichte an sich jeweils entsprechenden Stellen des neuronalen Netzes, also Stellen die beispielsweise die gleiche Struktur aufweisen und/oder deren Knoten sich semantisch entsprechen.

Die Kantengewichte der neuronalen Netze sind insbesondere dann zumindest teilweise gleich, wenn zumindest 90% der Kantengewichte gleich sind oder besonders bevorzugt 100% der Kantengewichte gleich sind.

Ein zweiter Aspekt der Erfindung betrifft ein Verfahren zum Trainieren der Vorrichtung nach einem der Ansprüche 1, 2 oder 3.

Ein Schritt des Verfahrens ist das Bereitstellen eines Trainingsdatenpaares, bestehend aus einem Trainings-Bild einem und einer ersten Trainings-Draufsicht. Das Trainingsdatenpaar ist dabei so ausgewählt, dass sich unter Berücksichtigung der relevanten Sicht-Informationen aus dem Trainings-Bild die erste Trainings-Draufsicht ergibt.

Ein weiterer Schritt des Verfahrens ist das Extrahieren der zweiten Sicht-Information aus dem Trainings-Bild mittels der Codier-Einheit, und das Extrahieren der Sicht-unabhängigen Inhalts-Information aus dem Trainings-Bild mittels der Codier-Einheit.

Ein weiterer Schritt des Verfahrens ist das Erzeugen der ersten Draufsicht in Abhängigkeit von der ersten Sicht-Information und der Sicht-unabhängigen Inhalts-Information mittels der ersten Generator-Einheit.

Ein weiterer Schritt des Verfahrens ist, mittels der ersten Diskriminator-Einheit zu entscheiden, ob die erste Draufsicht von der ersten Generator-Einheit erzeugt wurde, oder ob die erste Draufsicht von einer Kamera erzeugt wurden, deren optische Achse im Wesentlichen orthogonal zu einer Ebene ist, die aus der Fahrzeuglängsrichtung und der Fahrzeugquerrichtung aufgespannt ist.

Ein weiterer Schritt des Verfahrens ist das Vergleichen der ersten Draufsicht mit der ersten Trainings-Draufsicht, und das Anpassen der Codier-Einheit und/oder der ersten Generator-Einheit und/oder der ersten Diskriminator-Einheit in Abhängigkeit von dem Vergleich der ersten Draufsicht mit der ersten Trainings-Draufsicht.

Insbesondere werden die Codier-Einheit und die erste Generator-Einheit derart angepasst, dass die Wahrscheinlichkeit steigt, dass die erste Diskriminator-Einheit die erste Draufsicht als ein Bild einer Kamera klassifiziert, deren optische Achse im Wesentlichen orthogonal zu einer Ebene ist, die aus der Fahrzeuglängsrichtung und der Fahrzeugquerrichtung aufgespannt ist.

Alternativ oder zusätzlich wird die Diskriminator-Einheit derart angepasst, dass die Wahrscheinlichkeit steigt, dass die erste Diskriminator-Einheit die erste Draufsicht als ein von der ersten Generator-Einheit erzeugtes Bild erkennt.

Kern der Erfindung hierbei ist, dass die erste Diskriminator-Einheit einerseits und die ersten Generator-Einheit und die Codier-Einheit andererseits gleichzeitig hinsichtlich dem Erreichen von konkurrierenden Zielen trainiert werden. Dies führt dazu, dass die Qualität der von der ersten Generator-Einheit erzeugten ersten Draufsicht steigt und diese immer schwerer von einem tatsächlichen Kamerabild unterscheidbar ist.

In einer vorteilhaften Ausführungsform umfasst das Verfahren den Schritt des Anpassens von zumindest zwei der folgenden Einheiten in Abhängigkeit von dem Vergleich der ersten Draufsicht mit der ersten Trainings-Draufsicht: Codier-Einheit, erste Generator-Einheit, erste Diskriminator-Einheit.

Das Anpassen der Codier-Einheit, der ersten Generator-Einheit und/oder der ersten Diskriminator-Einheit bedeutet für den Fall, dass diese Einheiten jeweils ein neuronales Netz umfassen, eine Anpassung der Kantengewichte der neuronalen Netze.

Durch das Anpassen der Kantengewichte "lernt" das neuronale Netz.

Das Lernen kann beispielsweise wie folgt funktionieren: Nachdem die NetzStruktur aufgebaut wurde, erhält jedes Neuron ein zufälliges AnfangsGewicht. Dann werden die Eingangs-Daten in das Netz gegeben, und jedes Neuron gewichtet die Eingangs-Signale mit seinem Gewicht und gibt das Ergebnis weiter an die Neuronen des nächsten Layers. Am Output-Layer wird dann das Gesamt-Ergebnis berechnet - und dieses wird in der Regel wenig mit dem bekannten tatsächlichen Ergebnis zu tun haben, da ja alle Neuronen ein zufälliges Anfangsgewicht haben. Man kann jedoch die Größe des Fehlers berechnen, und den Anteil, den jedes Neuron an diesem Fehler hatte, und dann das Gewicht jedes Neurons ein kleines bisschen in die Richtung verändern, die den Fehler minimiert. Dann erfolgt der nächste Durchlauf, eine erneute Messung des Fehlers und Anpassung der Gewichte und so weiter. So "lernt" ein neuronales Netz zunehmend besser, von den Input-Daten auf die bekannten Output-Daten zu schließen.

Im Detail werden auf der einen Seite des neuronalen Netzes die Input-Daten eingespeist. Dabei wird jedes Input Signal an jedes einzelne Neuron des ersten Layers verteilt. Jedes Neuron gewichtet dann das ankommende Signal mit einem Input-spezifischen Gewicht (das zu Beginn zufällig vergeben wurde), addiert einen sogenannten Neuron-spezifischen Bias-Term hinzu und summiert alle so gewichteten Input Daten zum Output dieses einen Neurons.

Oft wird der Output dabei noch durch eine nicht lineare Aktivierungsfunktion geleitet, um z.B. einen bestimmten Wertebereich des Outputs zu erzwingen. Der Output jedes Neurons wird dann als Input an alle Neuronen des folgenden Layers weitergegeben. Dieser Prozess setzt sich fort, bis der Output-Layer erreicht wird, der das Ergebnis aller Berechnungen liefert.

Bis hierhin hat das künstliche neuronale Netz noch nichts gelernt. Da alle Gewichte bei der Initialisierung eines neuronalen Netzes zufällig innerhalb eines vorgegebenen Wertebereichs gewählt werden, wird das Ergebnis ein rein zufälliger Wert sein. Die derzeit am meisten genutzte Variante ein Netz lernen zu lassen, ist das sogenannten Supervised Learning, womit das Lernen anhand von Beispielen gemeint ist.

Ein Beispiel bedeutet in diesem Fall eine Kombination von echten Input-Output Datenpaaren. Diese Beispiele werden im Rahmen des Trainings von künstlichen neuronalen Netzen verwendet, um alle Gewichte und Bias Terms optimal einzustellen, sodass das Netz am Ende des Trainings für alle Input Daten und auch für bisher noch nicht gesehene neue Input Daten das korrekte Ergebnis berechnen kann.

Hierbei errechnet das noch untrainierte neuronale Netz für einen Satz von Input-Daten (auch Features genannt) jeweils ein Ergebnis. Dieses Ergebnis wird dann mit den bekannten Ergebnissen des Beispiel-Datensatzes (auch Targets oder Label genannt) verglichen, und es wird die Größe der Abweichung bzw. des Fehlers berechnet. Um sowohl positive als auch negative Abweichungen gleichzeitig abbilden zu können, wird zum Beispiel der Mittelwert der quadratischen Abweichung oder eine andere Fehlerfunktion verwendet.

Dann beginnt das eigentliche "Lernen": Der gemessene Fehler wird rückwärts zurück in das künstliche Neuronale Netz geleitet, und jedes Gewicht und jeder Bias Term wird ein kleines Stückchen in die Richtung angepasst, die den Fehler kleiner macht. Die Größe dieser Anpassung wird erstens über den Anteil, den ein bestimmtes Neuronen-Gewicht am Ergebnis hatte berechnet, und zum zweiten über die sogenannte Learning Rate, die zu den wichtigsten Einstellgrößen von neuronalen Netzen gehört.

Gängige Learning Rates sind z.B. 0,001 oder 0,01, d.h. nur ein Hundertstel bis ein Tausendstel des errechneten Fehlers wird pro Durchlauf korrigiert. Ist die Anpassung pro Durchlauf zu groß, kann es dazu kommen, dass das Minimum der Fehlerkurve verfehlt wird und die Abweichungen immer größer statt kleiner werden. Manchmal wird die Learning Rate daher während des Trainings zunehmend verkleinert, um das Minimum der Fehlerfunktion besser zu bestimmen.

Eine andere mögliche Problematik sind Fehlerfunktionen mit lokalen Minima, in denen das neuronale Netz "hängen" bleibt und daher das eigentliche Minimum nicht findet. Die Richtung der Korrektur wird durch die Ableitung der jeweiligen Funktionen errechnet, deren negativer Wert die Richtung vorgibt, in welcher die Fehlerfunktion minimiert wird. Die Minimierung der gewählten Fehlerfunktion ist das Ziel des Trainings bzw. des Lernens.

Nachdem alle Gewichte angepasst sind, erfolgt ein weiterer Durchlauf aller Input-Daten und die erneute Messung des Fehlers sowie die Backward Propagation dieses Fehlers zur erneuten Anpassung der Gewichte. Ein kompletter Durchlauf aller Input-Daten wird dabei jeweils als Epoche bezeichnet. Die Anzahl der Trainings-Epochen ist ebenfalls ein wichtiger Hyperparameter für das Training von neuronalen Netzen. Dabei können die Input-Daten je nach Größe des Datensatzes auch in gleich große Gruppen eingeteilt werden, und das Training kann jeweils pro Batch durchgeführt werden.

Dies kann z.B. sinnvoll sein, um ein künstliches neuronales Netz schneller lernen zu lassen, oder um Begrenzungen der Rechenkapazität des ausführenden Computers Rechnung einzuhalten. Wichtig ist bei der Aufteilung in Batches eine Normalverteilung der Werte innerhalb jedes Batches im Vergleich zum gesamten Datensatz. Wenn alle Batches das neuronale Netz ein Mal durchlaufen haben, ist eine Epoche vollendet.

Je mehr Beispiele ein künstliches neuronales Netz für das Training bekommt und je öfter es diese gesehen hat, desto kleiner wird der Fehler bei den Ergebnissen. Das Hinlaufen und Anlehnen der Fehlerkurve an die 100% Linie wird dabei als Convergence bezeichnet, und während des Trainings wird der Verlauf der Fehlerkurve beobachtet, um ggfs. das Training zu stoppen und Anpassungen an den Hyperparametern vornehmen zu können. Doch nicht immer bedeutet ein kleiner Fehler auch eine gute allgemeine Performance des neuronalen Netzes.

Denn wenn es während des Trainings alle bekannten Daten sehr oft gesehen hat, kann es dazu kommen, dass das künstliche neuronale Netz diese Daten eher auswendig lernt, statt ein abstraktes Konzept zu lernen. Dieses Problem wird auch als Overfitting bezeichnet. Da neuronale Netze auch hochkomplexe Funktionen abbilden können, besteht die Gefahr, dass sie irgendwann die perfekte Funktion für jeden bekannten Datenpunkt gefunden haben, diese Funktion aber für neue Daten nicht gut funktioniert.

Um sicherzustellen, dass ein neuronales Netz von bekannten Beispieldaten abstrahieren und auch korrekte Ergebnisse für bisher nicht gelernte Input-Daten liefern kann, werden die Beispieldaten vor dem Training unterteilt in Trainingsdaten, Testdaten und Blind-Testdaten, z.B. im Verhältnis 70 / 20 / 10.

Während des Trainings werden dann nur die Trainingsdaten verwendet, und die Fehlerquote (Error Rate) wird jeweils sowohl für die Trainingsdaten als auch für die Test-Daten gemessen. Der gemessene Fehler der Test-Daten wird jedoch nicht in das künstliche neuronale Netz zurück gespeist. Dann wird das neuronale Netz durch Anpassungen aller Variablen so verbessert, dass es die maximale Performance in Bezug auf Trainings- und Test-Daten erreicht. Dieses "tunen" von neuronalen Netzen gehört zu den Kerntätigkeiten von Ingenieuren für künstliche Intelligenz.

Erst wenn das Netz vermeintlich vollständig trainiert ist, kommen die Blind-Testdaten zum Einsatz. Wenn das künstliche neuronale Netz auch im Blind-Test gut abschneidet, ist die Wahrscheinlichkeit hoch, dass es ein abstraktes Konzept gut gelernt hat.

Für das beschriebene Supervised Learning wird entsprechend eine große Menge an Beispieldaten benötigt. Eine große Menge bedeutet hier z.B. eine Million Beispiele. Zwar können künstliche neuronale Netze teilweise auch mit kleineren Datensätzen schon beachtliche Ergebnisse erzielen, aber je mehr Daten zur Verfügung stehen, desto besser. Für die Klassifizierung von Bildern werden z.B. ab ca. 1.000 Beispielbildern pro Klasse brauchbare Ergebnisse erzielt. Eine ganze Forschungsrichtung der künstlichen Intelligenz beschäftigt sich auch mit Verfahren für das sogenannte One-Shot-Learning, d.h. das Lernen anhand von sehr wenigen oder nur einem Beispiel.

Das Supervised Learning (überwachtes lernen) selber kann noch weiter unterteilt werden in verschiedene Methoden der Datenverwendung und - Weitergabe innerhalb von künstlichen neuronalen Netzen: Bei sogenannten Recurring Neural Networks fließt z.B. das Ergebnis der vorherigen Input-Daten in die Berechnung des aktuellen Outputs ein, so dass z.B. Zeitreihen und Texte analysiert und verarbeitet werden können, so z.B. auch bei Long-Short-Term-Memory Netzen (LSTM) und Sequence-to-Sequence Netzen, die z.B. für die Spracherkennung und für die Übersetzung von Texten verwendet werden. Für die Bildverarbeitung werden sogenannte Convolutional Neural Networks (CNN) verwendet, welche Bilder mit einem Raster abtasten und von tieferen Ebenen (Punkten, Linien etc.) in jedem Layer weiter abstrahieren zu höheren Konzepten (ein Gesicht, ein Haus etc.).

Eine Ausführungsform ist ein Verfahren zum Trainieren der Vorrichtung nach einem der Ansprüche 2 oder 3.

Ein Schritt des Verfahrens ist das Bereitstellen eines Trainingsdatenpaares, bestehend aus einer Trainings-Sicht-Information und einer zweiten Trainings-Draufsicht.

Ein weiterer Schritt des Verfahrens ist das Erzeugen der zweiten Draufsicht in Abhängigkeit von der Trainings-Sicht-Information und der Rausch-Information mittels der zweiten Generator-Einheit.

Gegenüber dem Trainingsverfahren nach dem zweiten Aspekt der Erfindung hat das Trainingsverfahren nach dem dritten Aspekt der Erfindung den Vorteil, dass eine sogenannte Überanpassung der Generator- und Diskriminator-Einheiten an die Trainingsdaten verhindert wird, da in diesem Fall die Generator- und Diskriminator-Einheiten mit unerwarteten, weil zufällig erzeugten Eingangsinformationen zurechtkommen müssen.

Ein weiterer Schritt des Verfahrens ist, mittels der zweiten Diskriminator-Einheit zu entscheiden, ob die zweite Draufsicht von der zweiten Generator-Einheit erzeugt wurde, oder ob die zweite Draufsicht von einer Kamera erzeugt wurde, deren optische Achse im Wesentlichen orthogonal zu einer Ebene ist, die aus der Fahrzeuglängsrichtung und der Fahrzeugquerrichtung aufgespannt ist.

Ein weiterer Schritt des Verfahrens ist das Vergleichen der zweiten Draufsicht mit der zweiten Trainings-Draufsicht, und das Anpassen der zweiten Generator-Einheit und/oder der zweiten Diskriminator-Einheit in Abhängigkeit von dem Vergleich der zweiten Draufsicht mit der Trainings-Draufsicht.

Insbesondere wird die zweite Generator-Einheit derart angepasst, dass die Wahrscheinlichkeit steigt, dass die zweite Diskriminator-Einheit die zweite Draufsicht als ein Bild einer Kamera klassifiziert, deren optische Achse im Wesentlichen orthogonal zu einer Ebene ist, die aus der Fahrzeuglängsrichtung und der Fahrzeugquerrichtung aufgespannt ist. Alternativ oder zusätzlich wird die zweite Diskriminator-Einheit derart angepasst, dass die Wahrscheinlichkeit steigt, dass die zweite Diskriminator-Einheit die zweite Draufsicht als ein von der zweite Generator-Einheit erzeugtes Bild erkennt.

Insbesondere umfasst das Verfahren den Schritt des Anpassens der zweiten Generator-Einheit und der zweiten Diskriminator-Einheit in Abhängigkeit von dem Vergleich der zweiten Draufsicht mit der Trainings-Draufsicht.

Das Anpassen der der zweiten Generator-Einheit und/oder der zweiten Diskriminator-Einheit bedeutet für den Fall, dass diese Einheiten jeweils ein neuronales Netz umfassen, eine Anpassung der Kantengewichte der neuronalen Netze.

Eine Ausführungsform betrifft ein Verfahren zum Training der Vorrichtung nach einem der Ansprüche 2 oder 3.

Ein Schritt des Verfahrens ist das Trainieren der Vorrichtung durch zumindest einmalige Ausführung des Verfahrens nach dem zweiten Aspekt der Erfindung.

Ein weiterer Schritt des Verfahrens ist das Trainieren der Vorrichtung durch zumindest einmalige Ausführung des Verfahrens nach dem dritten Aspekt der Erfindung.

Insbesondere wird dabei der Schritt des Trainierens der Vorrichtung durch zumindest einmalige Ausführung des Verfahrens nach dem dritten Aspekt der Erfindung erst nach dem Schritt des Trainings der Vorrichtung durch zumindest einmalige Ausführung des Verfahrens nach dem zweiten Aspekt der Erfindung durchgeführt.

Die Erfindung wird nachfolgend anhand eines Ausführungsbeispiels unter Zuhilfenahme der beigefügten Zeichnungen beschrieben. In diesen zeigen:
- Fig. 1: ein Ausführungsbeispiel der erfindungsgemäßen Vorrichtung,
- Fig. 2: ein Ausführungsbeispiel eines Kraftfahrzeugs mit mehreren Kameras, und
- Fig. 3: ein Ausführungsbeispiel eines neuronalen Netzes.

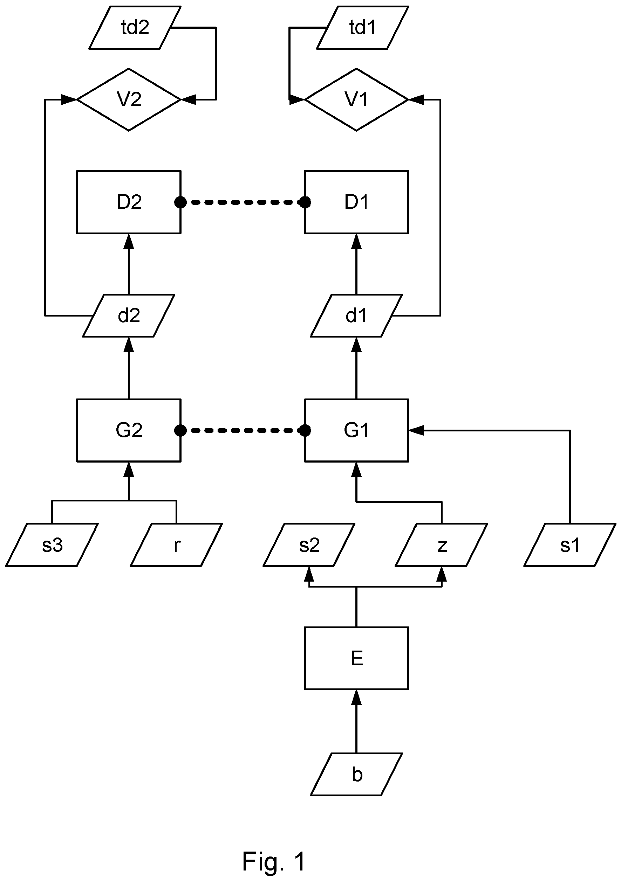

Fig. 1 zeigt eine Vorrichtung zum Erzeugen einer von einer ersten Sicht-Information s1 abhängigen ersten Draufsicht d1 auf ein Kraftfahrzeug aus zumindest einem Bild b von zumindest einer Kamera k1, k2, k3, k4, deren optische Achse im Wesentlichen parallel zu einer Ebene ist, die aus der Fahrzeuglängsrichtung und der Fahrzeugquerrichtung aufgespannt ist.

Die Vorrichtung ist dabei eingerichtet das zumindest eine Bild b von der Kamera k1, k2, k3, k4 entgegenzunehmen, aus dem Bild b eine zweite Sicht-Information s2 mittels einer Codier-Einheit E zu extrahieren, und aus dem Bild b eine Sicht-unabhängige Inhalts-Information z mittels der Codier-Einheit E zu extrahieren.

Außerdem ist die Vorrichtung eingerichtet, die erste Draufsicht d1 in Abhängigkeit von der ersten Sicht-Information s1 und der Sicht-unabhängigen Inhalts-Information z mittels einer ersten Generator-Einheit G1 zu erzeugen.

Die Vorrichtung umfasst außerdem eine erste Diskriminator-Einheit D1, die eingerichtet ist, die von der ersten Generator-Einheit G1 erzeugte Draufsicht d1 entgegenzunehmen, eine zweite Generator-Einheit G2, die eingerichtet ist, aus einer dritten Sicht-Information s3 und einer Rausch-Information r eine zweite Draufsicht d2 zu erzeugen, und eine zweite Diskriminator-Einheit D2, die eingerichtet ist, die von der zweiten Generator-Einheit G2 erzeugte Draufsicht d2 entgegenzunehmen.

Die erste Diskriminator-Einheit D1 und die zweite Diskriminator-Einheit D2 sind jeweils eingerichtet, zu entscheiden, ob die erste Draufsicht d1, bzw. die zweite Draufsicht d2 von der ersten Generator-Einheit G1, bzw. zweiten Generator -Einheit G2 erzeugt wurden, oder ob die erste Draufsicht d1, bzw. die zweite Draufsicht d2 von einer Kamera erzeugt wurden, deren optische Achse im Wesentlichen orthogonal zu einer Ebene ist, die aus der Fahrzeuglängsrichtung und der Fahrzeugquerrichtung aufgespannt ist.

Die erste Generator-Einheit G1, die zweite Generator-Einheit G2, die erste Diskriminator-Einheit D1 und die zweite Diskriminator-Einheit D2 umfassen jeweils ein neuronales Netz.

Das neuronale Netz der ersten Generator-Einheit G1 und das neuronale Netz der zweiten Generator-Einheit G2 haben jeweils zumindest teilweise die gleichen Kantengewichte, und das neuronale Netz der ersten Diskriminator-Einheit D1 und das neuronale Netz der zweiten Diskriminator-Einheit D2 haben jeweils ebenfalls zumindest teilweise die gleichen Kantengewichte.

Diese Vorrichtung kann durch die Verfahren nach dem zweiten Aspekt der Erfindung oder gemäss der Ausführungsform der Ansprüche 2 oder 3 trainiert werden.

Das Verfahren nach dem zweiten Aspekt der Erfindung umfasst insbesondere die folgenden Schritte:
- Bereitstellen eines Trainingsdatenpaares, bestehend aus einem Trainings-Bild b einem und einer ersten Trainings-Draufsicht td1,
- Extrahieren der zweiten Sicht-Information s2 aus dem Trainings-Bild b mittels der Codier-Einheit E,
- Extrahieren der Sicht-unabhängigen Inhalts-Information z aus dem Trainings-Bild b mittels der Codier-Einheit E,
- Erzeugen der ersten Draufsicht d1 in Abhängigkeit von der ersten Sicht-Information s1 und der Sicht-unabhängigen Inhalts-Information z mittels der ersten Generator-Einheit G1,
- mittels der ersten Diskriminator-Einheit D1 entscheiden, ob die erste Draufsicht s1 von der ersten Generator-Einheit G1 erzeugt wurde, oder ob die erste Draufsicht s1 von einer Kamera erzeugt wurden, deren optische Achse im Wesentlichen orthogonal zu einer Ebene ist, die aus der Fahrzeuglängsrichtung und der Fahrzeugquerrichtung aufgespannt ist,
- Vergleichen der ersten Draufsicht s1 mit der ersten Trainings-Draufsicht td1, und
- Anpassen der Codier-Einheit E und der ersten Generator-Einheit G1 und der ersten Diskriminator-Einheit D1 in Abhängigkeit von dem Vergleich der ersten Draufsicht d1 mit der ersten Trainings-Draufsicht td1.

Das Verfahren nach dem zweiten Aspekt der Erfindung umfasst insbesondere die folgenden Schritte:
- Bereitstellen eines Trainingsdatenpaares, bestehend aus einer Trainings-Sicht-Information s3 und einer zweiten Trainings-Draufsicht td2,
- Erzeugen der zweiten Draufsicht d2 in Abhängigkeit von der Trainings-Sicht-Information s3 und der Rausch-Information r mittels der zweiten Generator-Einheit G2,
- mittels der zweiten Diskriminator-Einheit D2 entscheiden, ob die zweite Draufsicht s2 von der zweiten Generator-Einheit G2 erzeugt wurde, oder ob die zweite Draufsicht s2 von einer Kamera erzeugt wurde, deren optische Achse im Wesentlichen orthogonal zu einer Ebene ist, die aus der Fahrzeuglängsrichtung und der Fahrzeugquerrichtung aufgespannt ist,
- Vergleichen der zweiten Draufsicht d2 mit der zweiten Trainings-Draufsicht td2, und
- Anpassen der zweiten Generator-Einheit G2 und der zweiten Diskriminator-Einheit D2 in Abhängigkeit von dem Vergleich der zweiten Draufsicht d2 mit der Trainings-Draufsicht td2.

Das Verfahren zum Trainieren der Vorrichtung nach dem vierten Aspekt der Erfindung verbindet die beiden Trainingsverfahren nach dem zweiten Aspekt der Erfindung und dem dritten Aspekt der Erfindung in vorteilhafter Weise.

Dieser Effekt ergibt sich insbesondere daraus, dass erste Generator-Einheit G1 und die zweite Generator-Einheit G2, sowie die erste Diskriminator-Einheit D1 und die zweite Diskriminator-Einheit D2 miteinander verbunden sind, indem sie sich gemeinsame Kantengewichte teilen.

Ein einer bevorzugten Ausführungsform wird dabei zuerst verstärkt das Trainingsverfahren nach dem zweiten Aspekt der Erfindung ausgeführt, bevor zu einem späteren Zeitpunkt verstärkt das Trainingsverfahren nach dem dritten Aspekt der Erfindung ausgeführt wird.

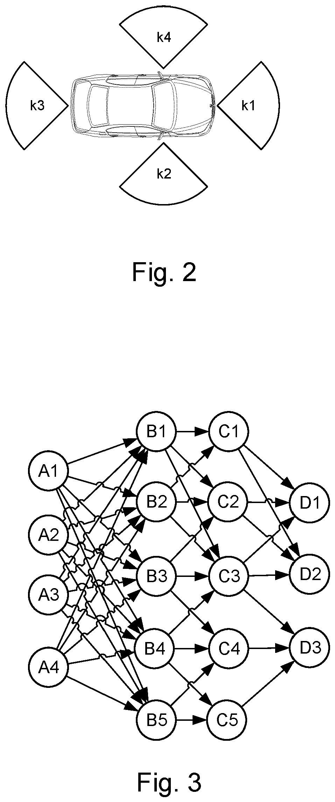

Fig. 2 zeigt ein Ausführungsbeispiel eines Kraftfahrzeugs mit mehreren Kameras k1, k2, k3, k4, die jeweils derart an dem Kraftfahrzeug angeordnet sind, dass ihre optischen Achsen im Wesentlichen parallel zu einer Ebene sind, die aus der Fahrzeuglängsrichtung und der Fahrzeugquerrichtung aufgespannt ist.

Fig. 3 zeigt ein Ausführungsbeispiel eines neuronalen Netzes, das aus vier Schichten A, B, C, D von Neuronen A1-A4, B1-B5, C1-C5, D1-D3 aufgebaut ist.

Die Neuronen sind teilweise durch Kanten miteinander verbunden. Wie bereits dargelegt, ist jeder dieser Kanten ein in Fig. 3 nicht dargestelltes Kantengewicht zugewiesen.

## Patentansprüche

1. Vorrichtung zum Erzeugen einer von einer ersten Sicht-Information (s1) abhängigen ersten Draufsicht (d1) auf ein Kraftfahrzeug aus zumindest einem Bild (b) von zumindest einer Kamera (k1, k2, k3, k4), deren optische Achse im Wesentlichen parallel zu einer Ebene ist, die aus der Fahrzeuglängsrichtung und der Fahrzeugquerrichtung aufgespannt ist, wobei die Vorrichtung eingerichtet ist,
• das zumindest eine Bild (b) von der Kamera (k1, k2, k3, k4) entgegenzunehmen,
• aus dem Bild (b) eine zweite Sicht-Information (s2) mittels einer Codier-Einheit (E) zu extrahieren,
• aus dem Bild (b) eine Sicht-unabhängige Inhalts-Information (z) mittels der Codier-Einheit (E) zu extrahieren, und
• die erste Draufsicht (d1) in Abhängigkeit von der ersten Sicht-Information (s1) und der Sicht-unabhängigen Inhalts-Information (z) mittels einer ersten Generator-Einheit (G1) zu erzeugen,
**dadurch gekennzeichnet, dass** die Vorrichtung zusätzlich
• eine erste Diskriminator-Einheit (D1) umfasst, die eingerichtet ist, die von der ersten Generator-Einheit (G1) erzeugte Draufsicht (d1) entgegenzunehmen,
• eine zweite Generator-Einheit (G2) umfasst, die eingerichtet ist, aus einer dritten Sicht-Information (s3) und einer Rausch-Information (r) eine zweite Draufsicht (d2) zu erzeugen, und
• eine zweite Diskriminator-Einheit (D2) umfasst, die eingerichtet ist, die von der zweiten Generator-Einheit (G2) erzeugte Draufsicht (d2) entgegenzunehmen,
wobei die Codier-Einheit (E), die erste Generator-Einheit (G1), die zweite Generator-Einheit (G2), die erste Diskriminator-Einheit (D1) und die zweite Diskriminator-Einheit (D2) jeweils ein neuronales Netz umfassen.

2. Vorrichtung nach Anspruch 1, wobei die erste Diskriminator-Einheit (D1) und die zweite Diskriminator-Einheit (D2) jeweils eingerichtet sind, zu entscheiden, ob die erste Draufsicht (d1), bzw. die zweite Draufsicht (d2) von der ersten Generator-Einheit (G1), bzw. zweiten Generator-Einheit (G2) erzeugt wurden, oder ob die erste Draufsicht (d1), bzw. die zweite Draufsicht (d2) von einer Kamera erzeugt wurden, deren optische Achse im Wesentlichen orthogonal zu einer Ebene ist, die aus der Fahrzeuglängsrichtung und der Fahrzeugquerrichtung aufgespannt ist.

3. Vorrichtung nach einem der Ansprüche 1 oder 2, wobei
• das neuronale Netz der ersten Generator-Einheit (G1) und das neuronale Netz der zweiten Generator-Einheit (G2) jeweils zumindest teilweise die gleichen Kantengewichte haben, und
• das neuronale Netz der ersten Diskriminator-Einheit (D1) und das neuronale Netz der zweiten Diskriminator-Einheit (D2) jeweils zumindest teilweise die gleichen Kantengewichte haben.

4. Verfahren zum Trainieren der Vorrichtung nach einem der Ansprüche 1, 2 oder 3, wobei das Verfahren die folgenden Schritte umfasst:
• Bereitstellen eines Trainingsdatenpaares, bestehend aus einer Trainings-Sicht-Information (s3) und einer zweiten Trainings-Draufsicht (td2),
• Erzeugen der zweiten Draufsicht (d2) in Abhängigkeit von der Trainings-Sicht-Information (s3) und der Rausch-Information (r) mittels der zweiten Generator-Einheit (G2),
• Mittels der zweiten Diskriminator-Einheit (D2) entscheiden, ob die zweite Draufsicht (s2) von der zweiten Generator-Einheit (G2) erzeugt wurde, oder ob die zweite Draufsicht (s2) von einer Kamera erzeugt wurde, deren optische Achse im Wesentlichen orthogonal zu einer Ebene ist, die aus der Fahrzeuglängsrichtung und der Fahrzeugquerrichtung aufgespannt ist,
• Vergleichen der zweiten Draufsicht (d2) mit der zweiten Trainings-Draufsicht (td2), und
• Anpassen der zweiten Generator-Einheit (G2) und/oder der zweiten Diskriminator-Einheit (D2) in Abhängigkeit von dem Vergleich der zweiten Draufsicht (d2) mit der Trainings-Draufsicht (td2).

5. Verfahren nach Anspruch 4, wobei das Verfahren den folgenden Schritt umfasst:
• Anpassen der zweiten Generator-Einheit (G2) und der zweiten Diskriminator-Einheit (D2) in Abhängigkeit von dem Vergleich der zweiten Draufsicht (d2) mit der Trainings-Draufsicht (td2).

6. Verfahren zum Training der Vorrichtung nach einem der Ansprüche 1, 2 oder 3, wobei das Verfahren die folgenden Schritte umfasst:
• Bereitstellen eines Trainingsdatenpaares, bestehend aus einem Trainings-Bild (b) einem und einer ersten Trainings-Draufsicht (td1),
• Extrahieren der zweiten Sicht-Information (s2) aus dem Trainings-Bild (b) mittels der Codier-Einheit (E),
• Extrahieren der Sicht-unabhängigen Inhalts-Information (z) aus dem Trainings-Bild (b) mittels der Codier-Einheit (E),
• Erzeugen der ersten Draufsicht (d1) in Abhängigkeit von der ersten Sicht-Information (s1) und der Sicht-unabhängigen Inhalts-Information (z) mittels der ersten Generator-Einheit (G1),
• Mittels der ersten Diskriminator-Einheit (D1) entscheiden, ob die erste Draufsicht (s1) von der ersten Generator-Einheit (G1) erzeugt wurde, oder ob die erste Draufsicht (s1) von einer Kamera erzeugt wurden, deren optische Achse im Wesentlichen orthogonal zu einer Ebene ist, die aus der Fahrzeuglängsrichtung und der Fahrzeugquerrichtung aufgespannt ist,
• Vergleichen der ersten Draufsicht (s1) mit der ersten Trainings-Draufsicht (td1), und
• Anpassen der Codier-Einheit (E) und/oder der ersten Generator-Einheit (G1) und/oder der ersten Diskriminator-Einheit (D1) in Abhängigkeit von dem Vergleich der ersten Draufsicht (d1) mit der ersten Trainings-Draufsicht (td1).
• Trainieren der Vorrichtung durch zumindest einmalige Ausführung des Verfahrens nach einem der Ansprüche 4 oder 5.

7. Verfahren nach Anspruch 6, wobei der Schritt des Trainierens der Vorrichtung durch zumindest einmalige Ausführung des Verfahrens nach einem der Ansprüche 4 oder 5 erst nach den anderen Schritten erfolgt.

## Claims

1. Device for generating a first top view (d1), dependent on first view information (s1), of a motor vehicle from at least one image (b) from at least one camera (k1, k2, k3, k4) the optical axis of which is substantially parallel to a plane spanned from the vehicle longitudinal direction and the vehicle transverse direction, wherein the device is configured
• to receive the at least one image (b) from the camera (k1, k2, k3, k4),
• to extract second view information (s2) from the image (b) by way of a coding unit (E),
• to extract view-independent content information (z) from the image (b) by way of the coding unit (E), and
• to generate the first top view (d1) on the basis of the first view information (s1) and the view-independent content information (z) by way of a first generator unit (G1),
**characterized in that** the device additionally
• comprises a first discriminator unit (D1) that is configured to receive the top view (d1) generated by the first generator unit (G1),
• comprises a second generator unit (G2) that is configured to generate a second top view (d2) from third view information (s3) and noise information (r), and
• comprises a second discriminator unit (D2) that is configured to receive the top view (d2) generated by the second generator unit (G2),
wherein the coding unit (E), the first generator unit (G1), the second generator unit (G2), the first discriminator unit (D1) and the second discriminator unit (D2) each comprise a neural network.

2. Device according to Claim 1, wherein the first discriminator unit (D1) and the second discriminator unit (D2) are each configured to decide whether the first top view (d1), respectively the second top view (d2), were generated by the first generator unit (G1), respectively second generator unit (G2), or whether the first top view (d1), respectively the second top view (d2), were generated by a camera the optical axis of which is substantially orthogonal to a plane spanned from the vehicle longitudinal direction and the vehicle transverse direction.

3. Device according to either of Claims 1 and 2, wherein
• the neural network of the first generator unit (G1) and the neural network of the second generator unit (G2) each have at least partially the same edge weights, and
• the neural network of the first discriminator unit (D1) and the neural network of the second discriminator unit (D2) each have at least partially the same edge weights.

4. Method for training the device according to one of Claims 1, 2 or 3, wherein the method comprises the following steps:
• providing a training data pair consisting of training view information (s3) and a second training top view (td2),
• generating the second top view (d2) on the basis of the training view information (s3) and the noise information (r) by way of the second generator unit (G2),
• deciding, by way of the second discriminator unit (D2), whether the second top view (s2) was generated by the second generator unit (G2), or whether the second top view (s2) was generated by a camera the optical axis of which is substantially orthogonal to a plane spanned from the vehicle longitudinal direction and the vehicle transverse direction,
• comparing the second top view (d2) with the second training top view (td2), and
• adjusting the second generator unit (G2) and/or the second discriminator unit (D2) on the basis of the comparison of the second top view (d2) with the training top view (td2).

5. Method according to Claim 4, wherein the method comprises the following step:
• adjusting the second generator unit (G2) and the second discriminator unit (D2) on the basis of the comparison of the second top view (d2) with the training top view (td2).

6. Method for training the device according to one of Claims 1, 2 or 3, wherein the method comprises the following steps:
• providing a training data pair consisting of a training image (b) and a first training top view (td1),
• extracting the second view information (s2) from the training image (b) by way of the coding unit (E),
• extracting the view-independent content information (z) from the training image (b) by way of the coding unit (E),
• generating the first top view (d1) on the basis of the first view information (s1) and the view-independent content information (z) by way of the first generator unit (G1),
• deciding, by way of the first discriminator unit (D1), whether the first top view (s1) was generated by the first generator unit (G1), or whether the first top view (s1) was generated by a camera the optical axis of which is substantially orthogonal to a plane spanned from the vehicle longitudinal direction and the vehicle transverse direction,
• comparing the first top view (s1) with the first training top view (td1), and
• adjusting the coding unit (E) and/or the first generator unit (G1) and/or the first discriminator unit (D1) on the basis of the comparison of the first top view (d1) with the first training top view (td1),
• training the device by carrying out the method according to either of Claims 4 and 5 at least once.

7. Method according to Claim 6, wherein the step of training the device by carrying out the method according to either of Claims 4 and 5 at least once takes place only after the other steps.

## Revendications

1. Dispositif permettant de générer une première vue de dessus (d1) dépendant d'une première information visuelle (s1) sur un véhicule automobile à partir d'au moins une image (b) d'au moins une caméra (k1, k2, k3, k4) dont l'axe optique est substantiellement parallèle à un plan qui est formé par la direction longitudinale de véhicule et la direction transversale de véhicule, le dispositif étant conçu pour
• recevoir ladite au moins une image (b) de la caméra (k1, k2, k3, k4),
• extraire de l'image (b) une deuxième information visuelle (s2) au moyen d'une unité de codage (E),
• extraire de l'image (b) une information de contenu (z) indépendante de la vision au moyen de l'unité de codage (E), et
• générer la première vue de dessus (d1) en fonction de la première information visuelle (s1) et de l'information de contenu (z) indépendante de la vision, au moyen d'une première unité de génération (G1),
**caractérisé en ce que** le dispositif comprend en outre
• une première unité de discrimination (D1) qui est conçue pour recevoir la vue de dessus (d1) générée par la première unité de génération (G1),
• une deuxième unité de génération (G2) qui est conçue pour générer à partir d'une troisième information visuelle (s3) et d'une information de bruit (r) une deuxième vue de dessus (d2), et
• une deuxième unité de discrimination (D2) qui est conçue pour recevoir la vue de dessus (d2) générée par la deuxième unité de génération (G2),
dans lequel l'unité de codage (E), la première unité de génération (G1), la deuxième unité de génération (G2), la première unité de discrimination (D1) et la deuxième unité de discrimination (D2) comprennent respectivement un réseau neuronal.

2. Dispositif selon la revendication 1, dans lequel la première unité de discrimination (D1) et la deuxième unité de discrimination (D2) sont respectivement conçues pour décider si la première vue de dessus (d1) ou la deuxième vue de dessus (d2) a été générée par la première unité de génération (G1) ou la deuxième unité de génération (G2) ou si la première vue de dessus (d1) ou la deuxième vue de dessus (d2) a été générée par une caméra dont l'axe optique est substantiellement orthogonal à un plan qui est formé par la direction longitudinale de véhicule et la direction transversale de véhicule.

3. Dispositif selon l'une quelconque des revendications 1 ou 2, dans lequel
• le réseau neuronal de la première unité de génération (G1) et le réseau neuronal de la deuxième unité de génération (G2) présentent respectivement au moins partiellement les mêmes pondérations des bords, et
• le réseau neuronal de la première unité de discrimination (D1) et le réseau neuronal de la deuxième unité de discrimination (D2) présentent respectivement au moins partiellement les mêmes pondérations des bords.

4. Procédé permettant d'entraîner le dispositif selon l'une quelconque des revendications 1, 2 ou 3, dans lequel le procédé comprend les étapes suivantes consistant à :
• fournir une paire de données d'entraînement composée d'une information visuelle d'apprentissage (s3) et d'une deuxième vue de dessus d'apprentissage (td2),
• générer la deuxième vue de dessus (d2) en fonction de l'information visuelle d'apprentissage (s3) et de l'information de bruit (r) au moyen de la deuxième unité de génération (G2),
• décider, au moyen de la deuxième unité de discrimination (D2), si la deuxième vue de dessus (s2) a été générée par la deuxième unité de génération (G2) ou si la deuxième vue de dessus (s2) a été générée par une caméra dont l'axe optique est substantiellement orthogonal à un plan qui est formé par la direction longitudinale de véhicule et la direction transversale de véhicule,
• comparer la deuxième vue de dessus (d2) avec la deuxième vue de dessus d'apprentissage (td2), et
• adapter la deuxième unité de génération (G2) et/ou la deuxième unité de discrimination (D2) en fonction de la comparaison de la deuxième vue de dessus (d2) avec la vue de dessus d'apprentissage (td2).

5. Procédé selon la revendication 4, dans lequel le procédé comprend l'étape suivante consistant à :
• adapter la deuxième unité de génération (G2) et la deuxième unité de discrimination (D2) en fonction de la comparaison de la deuxième vue de dessus (d2) avec la vue de dessus d'apprentissage (td2).

6. Procédé permettant d'entraîner le dispositif selon l'une quelconque des revendications 1, 2 ou 3, le procédé comprenant les étapes suivantes consistant à :
• fournir une paire de données d'entraînement composée d'une image d'apprentissage (b) et d'une première vue de dessus d'apprentissage (td1),
• extraire la deuxième information visuelle (s2) de l'image d'apprentissage (b) au moyen de l'unité de codage (E),
• extraire la deuxième information de contenu (z) indépendante de la vision de l'image d'apprentissage (b) au moyen de l'unité de codage (E),
• générer la première vue de dessus (d1) en fonction de la première information visuelle (s1) et de l'information de contenu (z) indépendante de la vision au moyen de la première unité de génération (G1),
• décider, au moyen de la première unité de discrimination (D1), si la première vue de dessus (s1) a été générée par la première unité de génération (G1) ou si la première vue de dessus (s1) a été générée par une caméra dont l'axe optique est substantiellement orthogonal à un plan qui est formé par la direction longitudinale de véhicule et la direction transversale de véhicule,
• comparer la première vue de dessus (s1) avec la première vue de dessus d'apprentissage (td1), et
• adapter l'unité de codage (E) et/ou la première unité de génération (G1) et/ou la première unité de discrimination (D1) en fonction de la comparaison de la première vue de dessus (d1) avec la première vue de dessus d'apprentissage (td1),
• entraîner le dispositif par une exécution au moins unique du procédé selon l'une quelconque des revendications 4 ou 5.

7. Procédé selon la revendication 6, dans lequel l'étape d'apprentissage du dispositif n'est effectuée par au moins une exécution unique du procédé selon l'une quelconque des revendications 4 ou 5 qu'après les autres étapes.
